(19) Europäisches Patentamt
European Patent Office
Office européen des brevets

(11) **EP 3 028 998 B1**

(12) **EUROPEAN PATENT SPECIFICATION**

(45) Date of publication and mention
of the grant of the patent:
**06.03.2019  Bulletin 2019/10**

(51) Int Cl.:
***C02F 3/30*** *(2006.01)*   ***C02F 3/00*** *(2006.01)*
***C02F 101/16*** *(2006.01)*

(21) Application number: **14196087.2**

(22) Date of filing: **03.12.2014**

(54) **Method of treating an effluent by nitrification-denitrification**

Verfahren zur Behandlung von Abwasser durch Nitrifikation/Denitrifikation

Procédé de traitement d'un effluent par nitrification-denitrification

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.06.2016  Bulletin 2016/23**

(73) Proprietors:
 • **Institut National des Sciences Appliquées
  de Toulouse
  31077 Toulouse Cedex 4 (FR)**
 • **CENTRE NATIONAL DE
  LA RECHERCHE SCIENTIFIQUE -CNRS-
  75016 Paris (FR)**
 • **INSTITUT NATIONAL DE LA RECHERCHE
  AGRONOMIQUE
  75007 Paris (FR)**

(72) Inventors:
 • **Sperandio, Mathieu
  31810 Venerque (FR)**
 • **Lefebvre, Xavier
  32200 GIMONT (FR)**
 • **Wu, Zhenjun
  31400 TOULOUSE (FR)**
 • **Pocquet, Mathieu
  31500 TOULOUSE (FR)**
 • **Mauret, Michel
  09420 Clermont (FR)**
 • **Mengelle, Evrard
  31190 GREPIAC (FR)**

(74) Representative: **Cabinet Plasseraud
  66, rue de la Chaussée d'Antin
  75440 Paris Cedex 09 (FR)**

(56) References cited:
 **AU-B2- 766 535      CA-A1- 2 866 996
 US-A1- 2008 223 784   US-A1- 2008 245 730
 US-A1- 2010 044 318   US-A1- 2012 085 704**

 • **YUAN X ET AL: "Effect of dissolved oxygen on
  nitrogen removal and process control in aerobic
  granular sludge reactor", JOURNAL OF
  HAZARDOUS MATERIALS, ELSEVIER,
  AMSTERDAM, NL, vol. 178, no. 1-3, 15 June 2010
  (2010-06-15), pages 1041-1045, XP026997386,
  ISSN: 0304-3894 [retrieved on 2010-02-18]**

Remarks:
The file contains technical information submitted after the application was filed and not included in this specification

**EP 3 028 998 B1**

## Description

### FIELD OF THE INVENTION

The present invention relates to a method of treating an effluent in a reactor comprising steps of aerobic nitrification and anoxic denitrification and to a device for carrying out such method.

### BACKGROUND OF THE INVENTION

Nitrogen compounds are the main source of pollution from industrial, domestic and agricultural effluents.

Biological water treatment processes are commonly used to reduce drastically the content of polluting nitrogenous substances and to transform them in non-polluting compounds. These processes include the biological nitrification-denitrification method usually using an activated sludge in a sequential batch reactor (SBR).

Such a method comprises introducing effluent to be treated in a bioreactor within which aerated and anoxic phases are alternately implemented.

During the aerated phase, the injection of oxygen as air or pure oxygen as for example in the reactor promotes the oxidation ammonium ions ($NH_4^+$) to nitrate ($NO_3^-$) by specific bacteria. The ammonium ions is first transformed to nitrite ($NO_2^-$) by ammonia oxidising bacteria (AOB), then nitrite are converted into nitrate by nitrites oxidising bacteria (NOB). This step is a nitrification step.

During the anoxic phase, the aeration of the reactor is stopped. Nitrate is then reduced into nitrite, and nitrite is successively reduced into non-polluting nitrogen gas ($N_2$), which is eliminated in the atmosphere. This step is a denitrification step.

Such biological treatment process is particularly effective.

However, it is relatively costly to implement due to the relatively high consumption of oxygen and carbon substrate. An optimal solution is to perform nitrification-denitrification over nitrite (also called "nitrate shunt" or "nitrogen short-cut"), i.e. suppressing the second step of nitrification (the conversion of nitrites into nitrates): ammonia is thus converted into nitrite (but not into nitrate), and nitrite is denitrified into nitrogen gas (nitrate is no more denitrified). This allows reducing the oxygen demand by 25% and the needs for carbon substrate by 40%.

Further, in wastewater treatment plants, during the biological removal of ammonium ions, the emission of nitrous oxide ($N_2O$) constitutes a major contribution to greenhouse gas production. Recently, it was demonstrated that a major part of this gas was produced by autotrophic denitrification by ammonium-oxidizing bacteria (AOB) which increases at high nitrite concentration and low oxygen demand (DO) (Kampschreur et al., 2009; Pocquet et al., 2013). Consequently, the $N_2O$ emissions of systems with nitrification-denitrification over nitrite can be much higher than those of conventional system with full nitrification-denitrification over nitrate (Rodriguez-Caballero et al., 2013). In Sequencing Batch Reactor (SBR) operated for nitrification-denitrification over nitrite, $N_2O$ emissions factors can reach more than 5% (mass of N-$N_2O$ produced per N removed) which counter balances the benefits of partial nitrification, i.e. reduction of oxygen demand and chemical oxygen demand (COD) needs (Rodriguez-Caballero et al., 2013). Moreover, alternating aerobic and anoxic periods has also a detrimental effect on $N_2O$ emissions (Rodriguez-Caballero and Pijuan, 2013).

In FR2966146, it is disclosed a process of water treatment by nitrification-denitrification that lowers the release of nitrous oxide compared to prior art. In this process, it is carried out an online measurement of nitrite concentration and pH of the effluent present in the reactor and a deduction of the concentration of nitrous acid from the measurement of nitrite concentration and pH measurement in order to better control the production of nitrous oxide. However, sensors for measuring nitrite concentration are very expensive and hard to maintain.

So, there is still a need for a cost effective method of treating wastewater by nitrification-denitrification over nitrite and which allows suppressing the $N_2O$ production.

### SUMMARY OF THE INVENTION

Now, the Applicant has found that by using cheap and easy to maintain sensors for dissolved oxygen (DO) and Oxidation-Reduction Potential (ORP), the efficiency of the method of treating wastewater can be improved and the production of nitrous oxide lowered.

A subject of the present invention is therefore a method of treating in a reactor an effluent comprising ammonium ions, said method comprising:

- at least one cycle comprising the following steps:

      (a) a step, hereinafter called "supplying step", of supplying said reactor with said effluent,
      (b) a step, hereinafter called "aeration step", to cause aerobic nitrification of ammonium ions wherein the reactor is aerated and
(c) a step, hereinafter called "non aeration step", to cause anoxic denitrification wherein aeration is stopped,

whereby a treated effluent is obtained,
and

(d) a step, hereinafter called "withdrawal step", of recovering of the treated effluent from said reactor,

wherein:

- aeration step (b) comprises the steps of:

    - measuring, in said reactor, the concentration of dissolved oxygen (DO) in said effluent,
    - continuously calculating the value of the first derivative of the DO with respect to time (dDO/dt)
    - noting dDO/dt and
    - when dDO/dt reaches a first threshold value:

        - waiting for a predetermined time ($T_{inter}$) and
        - stopping the aeration at the end of said $T_{inter}$,
        - whereby the aeration step is terminated

    and
    - the non-aeration step (c) comprises steps of:

        - measuring, in said reactor, a redox potential (ORP) of said effluent,
        - continuously calculating the value of the second derivative of the redox potential with respect to time ($d^2ORP/dt^2$)
        - noting $d^2ORP/dt^2$ and
        - when $d^2ORP/dt^2$ reaches a second threshold value, terminating the non-aeration step.

The detection of bending points and the associated control of the aerated and non-aerated steps allows maintaining a low and stable $N_2O$ emissions coupled to interesting N removal performances by means of nitrification-denitrification over nitrite.

Indeed, by strictly minimizing the aerated time to those only necessary to convert ammonia into nitrite (by means of bending point detection) the development of AOB bacteria that transform ammonium into nitrite is promoted but on contrary NOB bacteria which convert nitrites into nitrates are inhibited and progressively washed out from the bioreactor. During anoxic denitrification phase, the biomass is then mainly devoted to the transformation of nitrite to molecular nitrogen and the nitrate content is low. The use of DO bending point detection allows guarantying that ammonia is totally removed before switching from aerated phase to non-aerated period. The use of ORP bending point detection allows switching from non-aerated phase to aerated period when nitrite is totally removed. Accumulation of ammonia and nitrite are thus avoided from one cycle to another, which considerably limit $N_2O$ emission during both aerated and non-aerated period.

The present invention also relates to a device for carrying out the method of the invention comprising:

- a reactor
- means for supplying effluent,
- aeration means,
- treated effluent extraction means,
- a DO sensor for measuring the DO within said reactor,
- a processor adapted to:

    - record the measurements of the DO sensor,
    - continuously calculate dDO/dt and
    - stop the aeration means, when the dDO/dt reaches a first threshold value and after a predetermined time ($T_{inter}$),

- a redox sensor for measuring the redox potential within said reactor, and
- a processor adapted to:

- record the measurements of redox sensor,
- continuously calculate $d^2ORP/dt^2$ and
- to actuate the aeration means or the treated effluent extraction means, when $d^2ORP/dt^2$ reaches a second threshold value, to terminate the non-aeartion step (c).

## DETAILED DESCRIPTION OF THE INVENTION

The method of the invention relates to a method of treating an effluent to remove ammonium ions from said effluent and convert it in nitrogen.

The effluent may be for example domestic or industrial wastewater or any other kind of effluent comprising ammonium.

The effluent is treated in a reactor. Preferably, the reactor is a sequential batch reactor (SBR).

The method comprises at least one cycle comprising the following steps:

(a) a step, hereinafter called "supplying step", of supplying said reactor with said effluent,
(b) a step, hereinafter called "aeration step", to cause aerobic nitrification of ammonium ions wherein the reactor is aerated, and
(c) a step, hereinafter called "non-aeration step", to cause anoxic denitrification wherein aeration is stopped.

In the case where the nitrification-denitrification process is an usual nitrification-denitrification process (nitrification-denitrification over nitrates), the nitrification of ammonium ions corresponds to the conversion of ammonium ions into nitrites and then to the conversion of nitrites into nitrates and the denitrification corresponds to the conversion of nitrates into $N_2$.

In the case where the nitrification-denitrification process is a nitrification-denitrification over nitrites process (also called nitrate shunt), the nitrification of ammonium ions corresponds to the conversion of ammonium ions into nitrites and the denitrification corresponds to the conversion of nitrites into $N_2$.

In a preferred embodiment, the supplying step, the aeration step and the non aeration step are successive steps.

Cycle is a succession of supply/nitrification/denitrification.

In a preferred embodiment, cycle is followed by a settling step and a withdrawal step. Settling and withdrawal steps are performed when the maximal volume of the reactor is reached.

The method of the invention may comprise one or more cycles

Preferably, the method comprises more than one cycle.

Indeed, the inventors have found that by repeating successive cycles (each with supply/nitrification/denitrification), the emission of $N_2O$ can be reduced.

In one embodiment, the method comprises n cycles, wherein n is integer from 2 to 10. For example, the method may comprise 2, 3, 4, 5, 6, 7, 8, 9, 10 cycles.

Thus, for example, when the supplying, aeration and non-aeration steps are successive and the method comprises 2 cycles, the method comprises the following steps:

- (a1) a first supplying step of supplying said reactor with said effluent,
- (b1) a first aeration step to cause aerobic nitrification of ammonium ions wherein the reactor is aerated, and
- (c1) a first non-aeration step to cause anoxic denitrification wherein aeration is stopped

followed by:

- (a2) a second supplying step of supplying said reactor with said effluent,
- (b2) a second aeration step to cause aerobic nitrification of ammonium ions wherein the reactor is aerated, and
- (c2) a second non-aeration step to cause anoxic denitrification wherein aeration is stopped

whereby a treated effluent is obtained,
followed by:

(d) a withdrawal step of recovering of the treated effluent from said reactor.

The optimal number of cycles may be obtained empirically by testing the reactor or may be deduced of the features of the reactor and the effluent to be treated. Preferably, the optimal number of cycle can be chosen considering the optimal dilution factor (noted D, see below its calculation) and the volumetric exchange ratio (VER), i.e. the fraction of the reactor which is wasted during the withdrawn period. N=VER/D

At step (a) of the cycle, the reactor is supplied with the effluent. Typically, the step of supplying reactor with effluent is a step wherein the reactor is aerated.

The quantity of effluent supplied in the reactor may vary according various parameters. Especially, the inventors have found that, in order to limit $N_2O$ emission, it is preferred to limit the content in free nitrous acid ($HNO_2$) accumulated during the cycles. Optimally the maximal free nitrous acid concentration should not be higher than $0.5 \mu gN/L$. During the cycle ammonia is transformed into nitrite and free nitrous acid is proportional to nitrite (related to acid-basic constant of nitrous acid). It means that it is recommended to limit the content in ammonium ions in the reactor after the feeding with the effluent to be treated.

Thus, in one embodiment, the ammonium ions content of the effluent to be treated is determined and the supplying of effluent is stopped when said ammonium ions content is greater than a threshold value.

The threshold value in ammonium may be calculated with the pH and temperature as followed:

$$\left[ NH_4^+ \right]\max = \frac{\left[ HNO_2 \right]\max}{1 / (1 + e^{-2300/T(K)} . 10^{pH})}$$

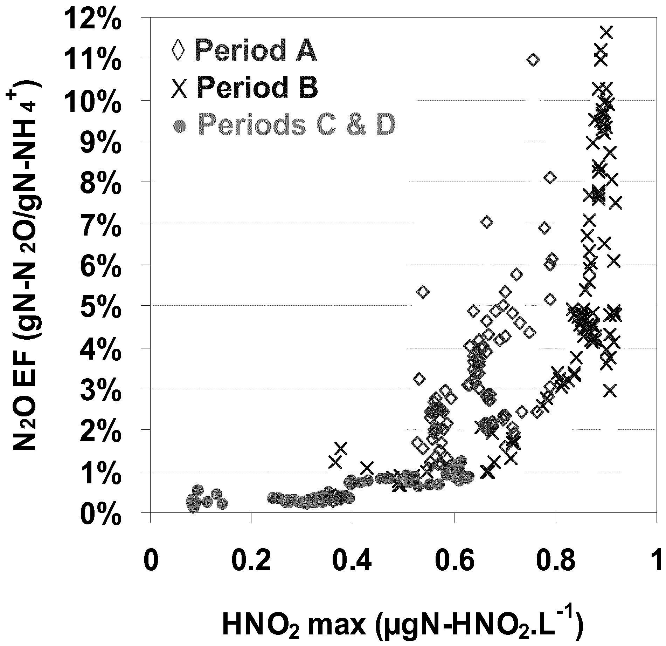

For example, considering a threshold value on free nitrous acid of $0.5 \mu gN/L$ (see figure 3), the optimal ammonium value vary from 1.96 mgN-$NH_4^+$/L to 80.16 mgN-$NH_4^+$/L for pH varying from 7 to 8.5 and temperature varying from 20°C to 30 °C (see table below).

| pH | T (°C) | NH4 (mgN-$NH_4^+$/L) |
|---|---|---|
| 7 | 20 | 1.96 |
| 7 | 25 | 2.23 |
| 7 | 30 | 2.54 |
| 7.5 | 20 | 6.19 |
| 7.5 | 25 | 7.06 |
| 7.5 | 30 | 8.02 |
| 8 | 20 | 19.57 |
| 8 | 25 | 22.32 |
| 8 | 30 | 25.35 |
| 8.5 | 20 | 61.88 |
| 8.5 | 25 | 70.59 |
| 8.5 | 30 | 80.16 |

The optimal dilution imposed for each feeding (each cycle) can be calculated with the ammonium concentration of wastewater.

$$D = C_{NH, treshold} / C_{NH, influent}$$

Preferably, the ammonium ions content of the effluent is measured before supplying reactor with effluent. Depending on this content prior to treatment, the time of supply is determined so that the ammonium ions content of the effluent to be treated in the reactor is not greater than a threshold value.

The ammonium ions content of the effluent in the reactor may also be measured continuously during the supplying step and the supplying stopped when ammonium ions content of effluent is greater than a threshold value.

Thus, the effluent may be provided, sequentially, in particular to allow the content of ammonium ions of the effluent in the reactor never being greater than this threshold value.

As discussed above, the effluent supplied in the reactor is treated in order to convert it ammonium ions content into nitrogen gas.

The transformation of ammonium ions in nitrogen is carried out through a biological nitrification-denitrification process. This well-known process involves biomass, usually in the form of an activated sludge. This biomass comprises various microorganisms that are involved in the conversion of ammonium ions into nitrogen.

In a preferred embodiment, the biomass is inoculated to the reactor before supplying the effluent.

Therefore, the reactor may comprise microorganisms selected from the group consisting of ammonia-oxidizing bacteria (AOB), nitrite oxidizing bacteria (NOB), denitrifier bacteria and anammox bacteria.

If anammox bacteria are present nitrite reduction into dinitrogen gas can be performed by these bacteria. In that case less or even no organic matter will be necessary for denitrification of nitrite as anammox bacteria uses ammonium as electron donor instead of organic matter as heterotrophic bacteria do. This process is generally called deammonification, but occurs simultaneously with nitrite denitrification. As a consequence less or even no external organic supply will be needed. In that case, the effluent containing ammonium will be supplied during or before the non-aeration step. The same control method for detecting the end of aeration step and non-aeration step as described before can be applied for limiting $N_2O$ emissions.

Further, the inventors have found that, due to a preliminary activation of the biomass, when the reactor is aerated before the supplying of the effluent, the emission of $N_2O$ is reduced.

Therefore, in one preferred embodiment, at least one cycle of the method of the invention further comprises, before the step of supplying reactor with effluent, a step (o), hereinafter called "pre-aeration step", wherein the reactor is aerated.

Thus, in this embodiment, the method comprises at least one cycle comprising the following steps:

- a pre-aeration step (o) wherein the reactor is aerated,

  - waiting for a determined time ($T_{pre-aeration}$),
  - terminating the pre-aeration step at the end of $T_{pre-aeration}$,

- the pre-aeration step is followed by a supplying step (a) wherein:

  - reactor is supplied with effluent and
  - the aeration is maintained in the reactor or the aeration is stopped,
  - terminating the supplying step (a) when the supplying of effluent is stopped,

- the supplying step (a) is followed by an aeration step (b) to cause aerobic nitrification of ammonium ions wherein the reactor is aerated, and
- a non-aeration step (c), to cause anoxic denitrification wherein aeration is stopped.

Since, the step (a) of supplying effluent is preferably an aerated step, in this embodiment, the aeration is maintained during the transition between the pre-aeration step (o) and the step (a).

Thus, in this embodiment, the method comprises at least one cycle comprising the following steps:

- a pre-aeration step (o) wherein the reactor is aerated,

  - waiting for a determined time ($T_{pre-aeration}$),
  - terminating the pre-aeration step at the end of $T_{pre-aeration}$,

- the pre-aeration step is followed by a supplying step (a) wherein:

  - reactor is supplied with effluent and
  - the aeration is maintained in the reactor,
  - terminating the supplying step (a) when the supplying of effluent is stopped,

- the supplying step (b) is followed by an aeration step (b) to cause aerobic nitrification of ammonium ions wherein the aeration in the reactor is maintained, and
- a non aeration step(c), to cause anoxic denitrification wherein aeration is stopped.

The time of the pre-aeration step ($T_{pre-aeration}$) may depend in particular, on the specificity of the reactor. It may be determined by carrying out test(s) prior to the implementation of the method or by calculating the optimal duration based, in particular, on the features of the reactor.

Preferably, $T_{pre-aeration}$ is from to 5 min to 30 min.

Typically, the step (a) of supplying the effluent is followed by a step (b) to cause aerobic nitrification of ammonium ions wherein the reactor is aerated, called aeration step.

Since, the step (a) is preferably an aerated step, in this embodiment, the aeration is kept during the transition between the step (a) and the aeration step (b).

Therefore, in case of a pre-aeration step (o), aeration is preferably kept from the step (o) to the aeration step (b).

The aeration step (b) comprises steps of:

- measuring, in said reactor, the concentration of dissolved oxygen (DO) in said effluent,
- continuously calculating the value of the first derivative of the DO with respect to time (dDO/dt)
- noting dDO/dt and
- when dDO/dt reaches a first threshold value:

  - waiting for a predetermined time ($T_{inter}$) and
  - stopping the aeration at the end of said $T_{inter}$,
  - whereby the aeration step is terminated.

The calculation of dDO/dt during aeration step (b) allows determining the end of the nitrification thereby determining the optimal time to stop aeration.

At the end of the nitrification, when NH4+ ions have been eliminated, the oxygen demand of the effluent is less important. dDO/dt rise until it reaches it bending point. Therefore, when dDO/dt is rising and reaches a predetermined first threshold it is indicative of the end of the nitrification, i.e. the depletion of ammonium in the liquid of the reactor.

Sensors which measure dissolved oxygen are not expensive. Further, it is the first derivative with respect to time which is measured. Therefore, there is no need to calibrate the sensor very regularly.

The first threshold value may be determined by carrying out preliminary test(s) or by calculating the optimal first threshold in order to have optimal nitrification performances and minimal $N_2O$ emissions based in particular on the features of the reactor and of the effluent to be treated.

Preferably, the first threshold value is from 7 to 14 $mgO_2$/L/h.

In one embodiment $T_{inter}$ is null. Then, the aeration is stopped when dDO/dt reaches a first threshold value

In a preferred embodiment, $T_{inter}$ is not null. This time between the end of the nitrification and the beginning of the non-aeration step allows reducing the emission of $N_2O$.

$T_{inter}$ depends on the features of the reactor and of the effluent to be treated. Preferably, $T_{inter}$ is from 10 to 20 minutes.

In one embodiment, aeration step (b) is terminated when the time of aeration is greater than a maximum aeration time ($T_{aeration\ max}$).

Indeed, there may be a need for such time out period if the calculation of dDO/dt is not adapted to the effluent to be treated. For example, it may be the case when the effluent comprises not enough ammonium ions to ensure an evolution of DO representative of a nitrification profile.

Preferably, DO is measured only during the aeration step.

The measure of DO and the calculation of dDO/dt may also be made during non-aeration step (c) and/or supplying step (a).

However, the supplying of effluent causes a disruption in dDO/dt. Therefore, during the supplying step and as long as dDO/dt is disrupted, it is preferred not to take in consideration DO and dDO/dt data.

Preferably, a time out period may be used during this disruption phase in order to avoid irrelevant data.

Therefore, in one embodiment, during the aeration step (b), the aeration is not stopped if the time of aeration is lower than a minimal aeration time ($T_{aeration\ mini}$).

Therefore, in this embodiment, the aeration step (b) comprises steps of:

- measuring, in said reactor, the concentration of dissolved oxygen (DO) in said effluent,
- continuously calculating the value of the first derivative of the DO with respect to time (dDO/dt)
- noting dDO/dt and
- when the time of aeration is greater than $T_{aeration\ mini}$ and
- when dDO/dt reaches a first threshold value:

  - waiting for a predetermined time ($T_{inter}$) and
  - stopping the aeration at the end of said $T_{inter}$.

The method of the invention also comprises a step to cause anoxic denitrification wherein aeration is stopped, called non aeration step.

This step is a non-aerated step.

The non-aeration step (d) may comprise a step of supplying the reactor with organic substrate.

However, the step of supplying organic substrate may be avoided, in particular when anammox bacteria are used.

The non-aeration step (c) comprises steps of:

- measuring, in said reactor, redox potential (ORP) of said effluent,
- continuously calculating the value of the second derivative of the redox potential with respect to time ($d^2ORP/dt^2$) and
- when $d^2ORP/dt^2$ reaches a second threshold value, terminating the non-aeration step (c).

Whereas previous studies used first derivative of the redox potential ($dORP/dt$) with respect to time to evaluate the end of the denitrification step, the inventors have found $d^2ORP/dt^2$ is a more reliable indicator of the end of the denitrification.

At the end of denitrification, $d^2ORP/dt^2$ decreases until it reaches a bending point. Therefore, when $d^2ORP/dt^2$ is decreasing and reaches a predetermined second threshold value, it is indicative of the optimal point to stop the non-aeration step.

As DO sensors, sensors which measure redox potential are not expensive. Further, it is the second derivative with respect to time which is measured. Therefore, there is no need to calibrate the sensor very regularly.

The second threshold value may be determined by carrying out preliminary test(s) or by calculating the optimal second threshold in order to have optimal denitrification performances and minimal $N_2O$ emissions based in particular on the features of the reactor and of the effluent to be treated.

Preferably, the second threshold value is from $-500mV/h^2$ to $-12000$ $mV/h^2$. Most preferably, the second threshold value is $-1500$ $mV/h^2$.

In one embodiment, non-aeration step (c) is terminated when the time of non-aeration is superior to a maximum non-aeration time ($T_{non-aeration\ max}$).

Indeed, similarly to $dDO/dt$, there may be a need for such time out period if the calculation $d^2ORP/dt^2$ is not adapted to the effluent to be treated. For example, it may be the case when the effluent does not comprise enough ammonium ions to ensure a representative evolution of redox potential.

Preferably, redox potential is measured only during the non-aeration step.

Redox potential may also be measured during aeration step and/or supplying step. However, $d^2ORP/dt^2$ is disrupted during the supplying of effluent or by the transition between the aeration step and the non-aeration step. Therefore, as long as $d^2ORP/dt^2$ is disrupted, it is preferred not to take in consideration data from ORP.

Preferably, as for DO, a time out period may be used during disruption phase(s) in order to avoid irrelevant data.

Therefore, in one embodiment, the non-aeration step (c) is not terminated if the time of non-aeration is lower than a minimal non-aeration time ($T_{non-aeration\ mini}$).

Therefore, in this embodiment, the non-aeration step (c) comprises steps of:

- measuring, in said reactor, the redox potential (ORP) of said effluent,
- continuously calculating the value of the second derivative of the redox potential with respect to time ($d^2ORP/dt^2$)
- noting $d^2ORP/dt^2$ and
- when the time of aeration is greater than $T_{non-aeration\ mini}$ and $d^2ORP/dt^2$ reaches a second threshold value, terminating the non-aeration step.

Following the non-aeration step (c), a new cycle of supplying-nitrification-denitrification is begun or the treated effluent is recovered.

If it remains effluent to be treated, a new cycle is begun.

If all the effluent to be treated has been treated, the treated effluent is recovered.

As mentioned above the number of cycles to treat the effluent may be predetermined. Preferably, when the predetermined number of cycles is done, a step, hereinafter called settling step, is carried out to cause the accumulation of biomass in the bottom of the reactor and the clarification of the treated effluent at the surface. Then, the effluent is recovered.

Therefore, once the predetermined number of cycles is done, it is followed by a withdrawal step of recovering of the treated effluent from said reactor.

The withdrawal step may be preceded by a step of settling.

Preferably, the step of recovering the effluent is a non-aerated step.

In a general way, the aforementioned preferential conditions aim to achieve method of treating wastewater with an improved efficiency and a lowered production of nitrous oxide.

The present invention also relates to a device for carrying out the method of the invention.

The device comprises a reactor, preferably a sequential batch reactor.

The device also comprises means for supplying the reactor with effluent.

Further, the device comprises aeration means. Aerations means may comprise, for example, an aeration turbine provided with a motor, a drive shaft and mixing blades or air nozzles with air pump supplying air to the air nozzles and a plurality of valves controlling supply of air from the air pump to the air nozzles.

The device also comprises treated effluent extraction means.

Typically, the device comprises a DO sensor for measuring the DO within said reactor a processor adapted to:

- record the measurements of the DO sensor,
- continuously calculate dDO/dt and
- stop the aeration means, when the dDO/dt reaches a first threshold value after a predetermined time ($T_{inter}$).

The device also comprises a redox sensor for measuring the redox potential within said reactor, and

- a processor adapted to:

    - record the measurements of redox sensor,
    - continuously calculate $d^2ORP/dt^2$ and
    - to actuate the aeration means or the treated effluent extraction means, when $d^2ORP/dt^2$ reaches a second threshold value to terminate the non-aeration step (c).

In one embodiment, the device of the invention is adapted to carry out only one cycle of supply/nitrification/denitrification. The treated effluent is then extracted at the end of the denitrification step. Therefore, in this embodiment, the processor is adapted to record the measurements of redox sensor,

- calculate continuously $d^2ORP/dt^2$ and
- to actuate the treated effluent extraction means, when $d^2ORP/dt^2$ reaches a second threshold value.

In another embodiment, there is n cycles of supply/nitrification/denitrification, wherein n is predetermined. Thus, the device is adapted to carry out n cycles of supply/nitrification/denitrification.

In this embodiment, the device comprises a memory to memorize the number of cycle and a processor adapted to:

- count the number of cycles,
  record the measurements of redox sensor,
- calculate continuously $d^2ORP/dt^2$ and
- when $d^2ORP/dt^2$ reaches a second threshold value

    - if the number of cycles is lower than n, to actuate the aeration means and
    - if the number of cycles is n, to actuate the treated effluent extraction means,

In one embodiment, the device of the invention further comprises a processor adapted to calculate the time of supplying of effluent in function of the ammonium content of the effluent to be treated.

The invention will be further illustrated by the following figures and examples.

## FIGURES

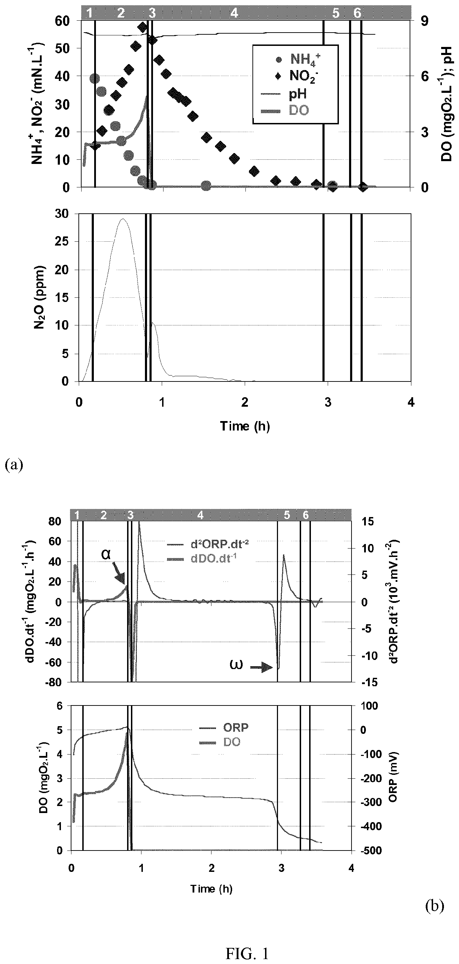

**Figure 1** shows: (a) Evolution of $N-NH_4^+$, $N-NO_2^-$, DO, pH and $N_2O$ during nitrification and denitrification. (b) Evolution of DO, ORP, the first derivative of DO and the second derivative of ORP during nitrification and denitrification.

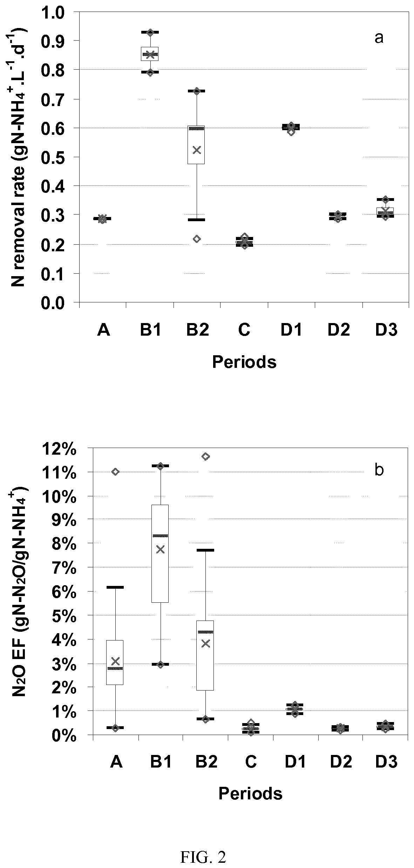

**Figure 2** shows: Evolution of the nitrogen removal rate (a) and $N_2O$ emission factor (b) during four different periods of the operating SBR. The median is represented with thick lines, the average with crosses, extreme values with triangles, whiskers with vertical lines delimited with horizontal lines on top and bottom.

**Figure 3** shows: (a) Correlation between the $N_2O$ emission factor and the maximum free nitrous acid concentration reach during nitrification for periods A, B, C and D. Each point corresponds to a SBR cycle. FNA concentrations have been calculated using average values of pH and temperature and the maximum nitrite concentration of each cycle.

(b) Statistic distributions of the free nitrous acid concentration. The median is represented with thick lines, the average with crosses, extreme values with triangles, whiskers with vertical lines delimited with horizontal lines on top and bottom..

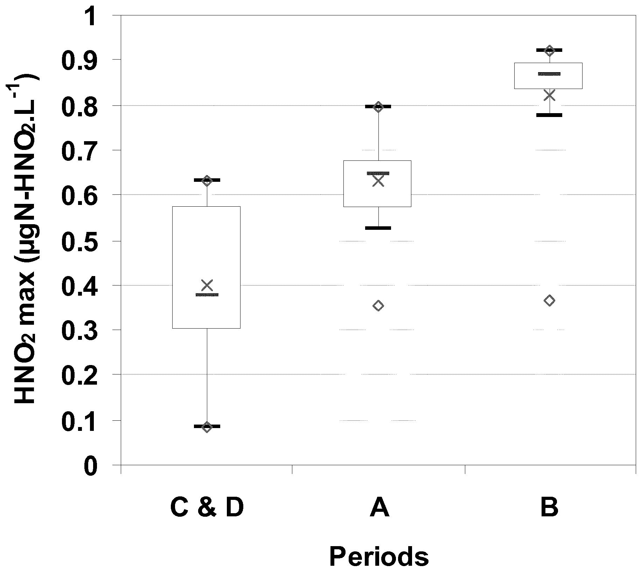

**Figure 4** shows: (a) correlation between $N_2O$ emission factor and the average DO during nitrification for periods A, B, C and D. Each point corresponds to a SBR cycle. (b) Statistic distributions of DO. The median is represented with thick lines, the average with crosses, extreme values with triangles, whiskers with vertical lines delimited with horizontal lines on top and bottom.

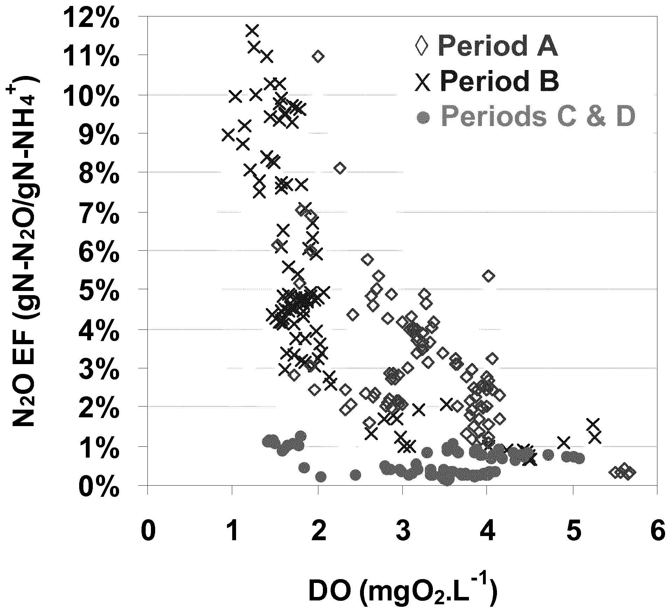

**Figure 5** shows (a) Correlation between average pH and average DO calculated during nitrification for periods A, B, C and D. Each point corresponds to a SBR cycle. FNA concentrations have been calculated using average values of pH and temperature and the maximum nitrite concentration of each cycle.

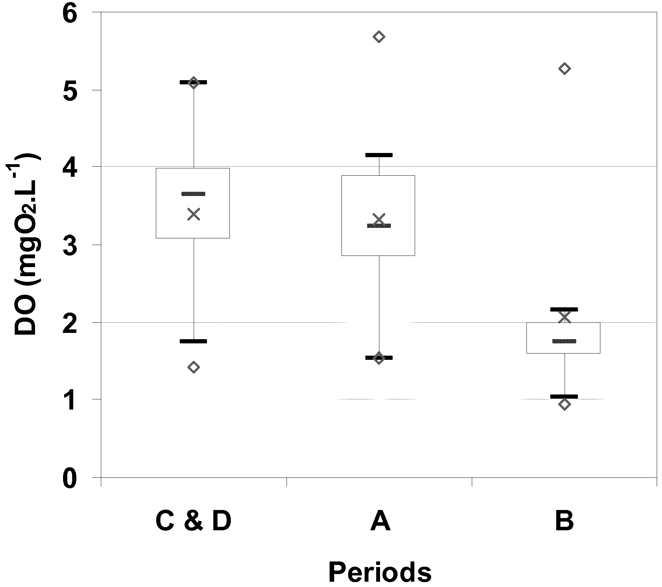

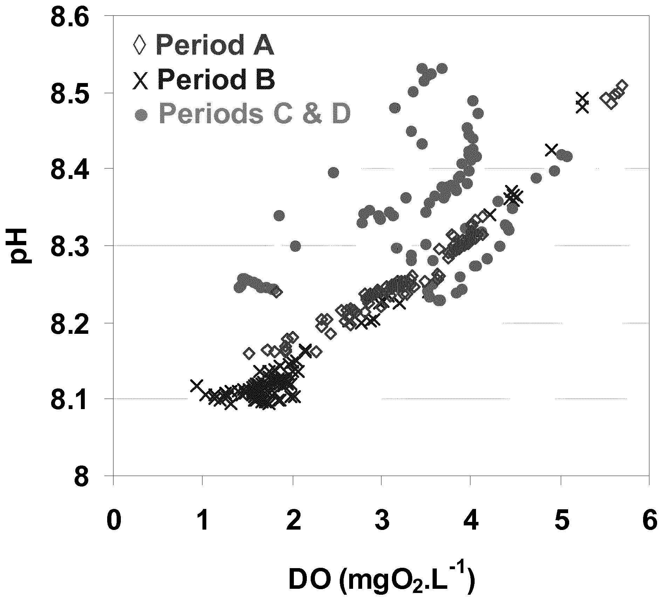

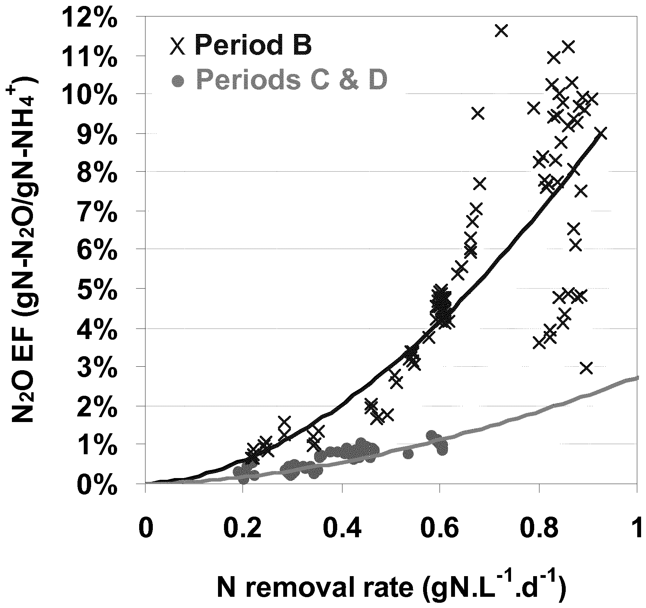

**Figure 6** shows (a) Correlation between $N_2O$ emission factor and nitrogen removal rate for periods A, B, C and D. Each point corresponds to a SBR cycle. Lines correspond to trend curves relative to the different data series.

## EXAMPLES

## Materials and methods

*Experimental set-up and operating conditions*

Experiments were performed in a lab-scale reactor (1.43-1.63 L of liquid) equipped with an intermittent aeration system (fine bubble injection), a mechanical stirrer (Rushton type with constant stirring rate of 465 rpm) and a water jacket for temperature control (maintained at 28 $\pm$ 0.5 °C). pH (H8481HD from Schott), dissolved oxygen (DO) (Visiferm DO Arc 120 from Hamilton) and oxidation-reduction potential (ORP) (PL89225Pt from Schott) were monitored during all the study. Air flow rate was imposed with a mass flowmeter. The gas was collected at the top of the reactor with a flow of 0.2 L.min$^{-1}$ for analysis of $N_2O$ (X-STREAM X2GP from Emerson; range: 0-100 ppm). All the data were monitored every 20 seconds. A control panel connected to a computer allowed managing stirring, aeration and all inputs and outputs of the reactor. The system was inoculated with a sludge sample from the activated sludge process of a WWTP with stable nitrification (Graulhet, France, 50 000 PE; sludge retention time of 20 d) receiving domestic and industrial wastewater (70% from tanneries). The initial concentration was closed to 4 gVSS.L$^{-1}$. The lab scale reactor was operated in SBR mode with automatic feeding and wastage. A sludge retention time (SRT) of 15 d$^{-1}$ was maintained. The system was fed with a high strength synthetic wastewater (462 mgN-NH$_4^+$.L$^{-1}$) and a complementary solution was used as a source of organic carbon (18.8 gCOD.L$^{-1}$) for heterotrophic denitrification. During all the study, chemical species were quantified by ionic chromatography (IC25, 2003, DIONEX, USA). Ammonium, VSS, COD were determined using standard methods. The reactor was operated over a 120 days period in sequencing batch mode with a cycle composed of alternating aerobic period (nitrification) and anoxic period (denitrification), followed by settling (20 minutes) and withdraw (8 minutes). Aerobic period was initiated by the feeding of ammonium-rich effluent (20 mL.min$^{-1}$, 10 min) and anoxic period started with addition of complementary solution respectively (6.25 mL.min$^{-1}$, 2.5 to 7.5 minutes). During the first 35 days of operation (case A), nitrification and denitrification durations were fixed to 100 minutes and 180 minutes respectively. Then automatic control of aerobic and anoxic durations has been activated based on DO and ORP signals with the method described below (cases B, C, D).

*Calculations*

The $N_2O$ gas phase concentration measured is converted into emission rate (ER) with the following equation, considering that $N_2O$ behave like an ideal gas. The total amount of $N_2O$ emitted during an aerated period is calculated by integration of the $N_2O$-ER. Emissions factor (noted EF) is calculated as the ratio of $N_2O$ emission to the amount of ammonium removed.

$N_2O$-ER (gN-$N_2O$.L$^{-1}$.h$^{-1}$) = $N_2O$(ppmv) .10$^{-6}$.Q$_{gas}$(L.h$^{-1}$).Vm$^{-1}$(25.0376 L.mol$^{-1}$ at 28.0 °C and 1 atm).2.M$_N$(14.00674 g.mol$^{-1}$).V$^{-1}$(L liquid medium)

The concentration of free nitrous acid (HNO$_2$, noted FNA) is calculated according to (Anthonisen et al., 1976).

## RESULTS

*Example of a typical SBR cycle*

A typical cycle of the SBR obtained after 45 days of operation (phase B) is presented in Figure 1 (a). Ammonium is fed during the first 10 minutes (period 1) of the aerobic period with a volumetric exchange ratio of 12.3 %. In that example, it corresponds to a total amount of ammonium to nitrify of 56.7 $mgN-NH_4^+.L^{-1}$ which is partly oxidized into nitrite during this feeding period as nitrification takes place as soon as period 1 begins. Aeration is maintained (period 2) until the depletion of ammonium. All the nitrified ammonium was converted into nitrite as nitrite oxidation was stopped after 40 days due to the operational conditions. Actually, Nitrite Oxidising Bacteria (NOB) were outcompeted due to simultaneous effect of ammonium inhibition, substrate privation (aeration is stopped after ammonia depletion) and high temperature (growth rate of ammonium oxidizing bacteria becoming higher than those of NOB). Aeration is interrupted from periods 3 to 6 maintaining anoxic condition. Period 3 corresponds to the introduction of 18.75 ml of secondary solution (organic carbon source) into the reactor. Then, nitrite was removed by denitrification (periods 3 and 4). After the exhaustion of nitrite, a settling period (period 5) was followed by a last decanting period (period 6). Emission of $N_2O$ is observed throughout the aerobic period. The $N_2O$ profile in the gas phase shows a maximum (28.9 ppm). After that, the rate of $N_2O$ emission decreases according to the decrease of nitritation rate. In this example, 1.84% (emission factor) of the amount of nitrogen oxidized during the aerobic period has been transformed into $N_2O$. During all the study, $N_2O$ was mainly emitted during aerobic periods. Emissions during the anoxic phase were quantified punctually by using nitrogen gas injection and were negligible compared to aerobic emissions, which can be explained by a sufficient COD/N ratio during denitrification period. It was also observed that the anoxic $N_2O$ production was limited if the aeration was stopped after the end of $N_2O$ peak emissions, i.e. a few minutes after the ammonium depletion.

*Automatic control system*

Evolution of DO, ORP, the first derivative of DO and the second derivative of ORP are presented in Figure 1 (b). DO increases rapidly as soon as the cycle begins, then stabilizes during nitritation period and starts to increase again when ammonia is depleted. The point $\alpha$ is determined by a threshold limit on DO derivative, corresponding to the end of nitritation. In the meanwhile ORP decreases during anoxic period and this rate accelerates as soon as the nitrite is depleted (commonly attributed to the start of sulfate reduction activity). The point $\omega$ corresponding to the end of denitrification is detected with a threshold limit on the second derivative of ORP. The automatic control system is based on these signals. When the point $\alpha$ is reached, this signifies that ammonium is depleted and the system automatically moves to the next period of the cycle. Similarly, the end of denitrification is detected when the point $\omega$ is reached and the system moves automatically to the settling period. Threshold values used for the control of the cycle presented in Figure 1 (b) are 14 $mgO_2.L^{-1}.h^{-1}$ and - 12000 $mV.h^{-2}$ for $\alpha$ and $\omega$ respectively. The first and second derivatives are calculated with linear regression associated to the 15 last data which correspond to the last 5 minutes. The use of derivatives signals allows the system to be relatively insensitive to possible drift of DO and ORP absolute values due to calibration default.

*Effect of the control strategy on performances and $N_2O$ emissions*

The impact of automatic control, cycle configuration and operating parameters has been analyzed on 4 successive case studies presented in Table 1 below. Period A corresponds to the reference condition with constant duration of aerobic and anoxic periods. The control system has been activated during case studies B, C and D. In addition, cycle configuration was slightly adapted during phases C and D (configuration 2): an aerated period (15 minutes) before the feeding of ammonium-rich wastewater has been introduced and the aerated period has been extended by 20 to 40 additional minutes after the exhaustion of ammonium ($\alpha$). A step-feed mode was tested during phase C, and different air flow rates and COD/N ratios were also compared. For each case study, a same operating condition was maintained during at least 10 cycles.

Table 1. Characteristics of four periods of the operating SBR.

| Period | Automatic control | Cycle configuration | Step-feed | $NH_4^+$ removed ($mgN.L^{-1}$) | COD/N | Qgas ($L.h^{-1}$) |
|--------|-------------------|---------------------|-----------|------------------------------|-------|-------------------|
| A | NO | 1 | 1 | 55.0 | 4.5 | 70 |
| B1 | YES | 1 | 1 | 55.0 | 4.5 | 111.4 |
| B2 | | | | | 3.4 | |
| C1 | YES | 2 | 5 | 68.7 | 4.1 | 54.8 |
| C2 | | | | | 6.5 | 26.1 |

(continued)

| Period | Automatic control | Cycle configuration | Step-feed | NH$_4^+$ removed (mgN.L$^{-1}$) | COD/N | Qgas (L.h$^{-1}$) |
|---|---|---|---|---|---|---|
| D1 | | | | 51.0 | 5.0 | 111.4 |
| D2 | YES | 2 | 1 | 36.0 | 8.4 | |
| D3 | | | | | | 83.1 |

After 40 days of operation (5 days after the transition to case B), the shunt of nitrate has been established and it was maintained until the end of the study. Evolution of nitrogen removal performances and N$_2$O emissions during the four case studies are represented with boxplot in Figure 2 a and b respectively. Compared to the reference phase (case A), the automatic control without optimization of the configuration of cycles (B1, B2) improves the nitrogen removal performance of the process (increasing the median of nitrogen removal rate from 0.29 gN-NH$_4^+$.L$^{-1}$.d$^{-1}$ for case A to 0.85 gN-NH$_4^+$.L$^{-1}$.d$^{-1}$ and 0.60 gN-NH$_4^+$.L$^{-1}$.d$^{-1}$ for subcases B1 and B2 respectively) but dramatically impacts the N$_2$O emission factor, increasing the median of this factor between cases A, B1 and B2 (2.74 % for case A, 8.30 % and 4.28 % for subcases B1 and B2 respectively). A high variability of the N$_2$O emission factor is observed both for the reference period (case A) with time based system (configuration 1) and with the automatic control without modification of the cycle configuration (B1, B2). The transition between configuration 1 and configuration 2 (additional short initial aerobic phase, introduction of a time delay after the end of nitrification) allows reducing emissions while controlling nitrogen removal performances. A mean N$_2$O-EF of 1.0 % is obtained for a mean nitrogen removal rate of 0.60 gN-NH$_4^+$.L$^{-1}$.d$^{-1}$ for the subcase D1. These values are managed by the amount of ammonium removed for periods automatically controlled by the system coupled to the optimized configuration. For subcases D2 and D3, this pair of mean values decreases to [0.27 % - 0.30 gN-NH$_4^+$.L$^{-1}$.d$^{-1}$] and [0.32 % - 0.31 gN-NH$_4^+$.L$^{-1}$.d$^{-1}$] respectively. The feeding of ammonium in 5 steps (case C) allows decreasing the mean N$_2$O-EF to 0.24 % with a mean nitrogen removal rate of 0.21 gN-NH$_4^+$.L$^{-1}$.d$^{-1}$.

*Effect of free nitrous acid on N$_2$O emissions*

For each cycle the maximal nitrite and free nitrous acid concentrations (reached at the end of aerobic phase) were measured or calculated. The correlation between these concentrations and the emission factor has been represented in figure 3a and 3b for free nitrous acid and nitrite respectively. On one hand, a large variation of emissions was observed for the same level of nitrite concentration and no clear relationship can be demonstrated between these parameters. On the other hand, the relationship between the maximum free nitrous acid concentration and emission factor appears clearly in Figure 3 a. It appears that the emission factor is exponentially correlated to the free nitrous acid concentration with a threshold value around 0.70 $\mu$gN-HNO$_2$.L$^{-1}$ beyond which the emission factor increases exponentially with a great dispersion.

*Relation between DO concentration and N$_2$O emission factor*

The emission factor versus DO is presented in Figure 4 a (average value of DO throughout the aerobic period). The statistic distribution of oxygen concentrations in cases A, B, C and D is presented Figure 4 b. For cases A and B, emissions of increases when DO decreases. Highest emission factors (3 to 12% of nitrogen removed) were observed at low DO in case B, which is simultaneously the case with highest concentration of FNA. In cases C and D, the effect of DO does not appear clearly; emission factors remain lower than 1.22 % throughout these periods despite an important variability of the dissolved oxygen concentration from 1.42 mgO$_2$.L$^{-1}$ to 5.10 mgO$_2$.L$^{-1}$. In different previous studies higher emission of was detected at low DO concentrations (Kampschreur et al., 2009; Pijuan et al., 2014). But in this study, this effect is more pronounced for cycles operated with the cycle's configuration 1 (cases A and B) than those operated with the configuration 2 (case C and D).

*Correlated effects of operational parameters*

A correlation (almost linear) appears between DO and pH for cases A and B. Variation of DO and pH depends mainly on two similar factors: (1) the variation of biodegradable COD present in aerobic phase which controls the CO$_2$ production by heterotrophic activity and influences the DO for a given air flow rate and (2) the variation of air flow rate which controls the stripping rate of CO$_2$ and the DO as well. In this study the presence of biodegradable COD during nitrification in aerobic phase is due to residual organic matter not used during the previous anoxic phase for cycles operated with the configuration 1. This excess leads both to DO and pH decrease, the later leading to an increase of FNA as this concentration is directly correlated to the pH value. For cases C and D, the correlation between DO and pH does not appear. Indeed, the introduction of the aerobic period before ammonium feeding allows removing the residual organic matter and increasing the pH with the stripping of inorganic carbon. The extension of the aerated period after the depletion of ammonium also allows increasing the pH as well. Thus, the optimization of the configuration leads to the decorrelation between DO and pH during nitrification and for a given DO concentration, the pH will be higher with the configuration 2 leading to a lower free nitrous acid concentration. This can partly explain the relation between DO and $N_2O$-EF in Figure 4 a. Below a pH value of 8.2, the FNA concentration crosses the threshold value of 0.70 $\mu$gN-$HNO_2$.$L^{-1}$ for cases A and B corresponding to a DO lower than 2.5 $mgO_2$.$L^{-1}$ (Figure 5). For cases C and D, the pH is higher for this range of DO and FNA concentrations remain lower than 0.70 $\mu$gN-$HNO_2$.$L^{-1}$.

*Control strategies for the mitigation of $N_2O$ emissions in SBR*

Results clearly demonstrated the benefit of the control system based on configuration 2 (periods C, D) for minimising emission factor. The emission factor as a function of the nitrogen removal rate is presented in Figure 6. Highest emissions of were clearly observed for case B, with a low DO, high FNA concentration and high nitrogen removal rates. For agiven nitrogen removal rate and a given DO concentration the $N_2O$-EF is lower with the optimized configuration (C and D). Thus, this optimized control system allows exploring interesting ranges of DO and nitrogen removal rates in term of process performances while, at the same time, the accumulation of FNA concentration is limited, thus reducing significantly emissions of $N_2O$.

Finally several recommendations can be proposed for emission mitigation in SBR with short cut nitrification / denitrification:

(1) Limit the presence of readily biodegradable COD during nitrification which impacts the competition between nitrifiers and heterotrophs on oxygen, decreases the DO and possibly the pH during nitrification. This was done in this study by introducing an aerobic phase before N-rich effluent feeding, this could be done also by an optimal pre-anoxic (DN) phase in SBR receiving wastewater containing both COD and ammonium.

(2) Limit the accumulation of FNA below 0.50 $\mu$gN-$HNO_2$.$L^{-1}$. This can be done by limiting the amount of ammonium to be removed during nitrification period (step-feed, reduction of the volumetric exchange ratio) or by increasing the pH. It was done in this study by means of a 5-step feed strategy (case C) coupled to a slight increase of the pH due to modification of cycle configuration.

(3) Slightly extend the aerobic period after the exhaustion of ammonium. The system avoids switching in anoxic conditions as the emitted by AOB during nitrification is not finished (extension of the aerobic period after the detection of the DO bending point).

**Conclusions**

An automatic control system for nitrification / denitrification over nitrite is demonstrated in this work.

The DO and ORP bending points allow detecting the end of nitrification and denitrification respectively. By adapting the length of aerobic and anoxic periods, the system allows to outcompete nitrite oxidizing bacteria and maintain full conversion of ammonia into nitrite, and full removal of nitrite during anoxic period.

The emission factor is exponentially correlated to the free nitrous acid concentration with low emissions under 0.5$\mu$gN-$HNO_2$.$L^{-1}$ and a threshold value of 0.70 $\mu$gN-$HNO_2$.$L^{-1}$ beyond which the $N_2O$-EF increases exponentially.

Limiting the ammonium concentration for each feeding cycle allows limiting FNA accumulation and emissions. Dividing the feeding and reaction time in n successive cycles (step feed strategy) is a solution to limit the emissions.

Supplementary aeration time before influent feeding and after the end of nitrification allows reducing $N_2O$ emissions

The optimization of control system allows reducing the $N_2O$ emission factor to less than 1% for a nitrogen removal rate of 0.6 gN-$NH_4^+$.$L^{-1}$.$d^{-1}$. Moreover, $N_2O$ emission factor could be limited to less than 0.2% for a nitrogen removal rate of 0.3 gN-$NH_4^+$.$L^{-1}$.$d^{-1}$.

**REFERENCES**

Throughout this application, various references describe the state of the art to which this invention pertains. The disclosures of these references are hereby incorporated by reference into the present disclosure.

Anthonisen, A.C., Loehr, R.C., Prakasam, T.B.S., Srinath, E.G., 1976. Inhibition of Nitrification by Ammonia and Nitrous Acid. Journal (Water Pollution Control Federation) 48, 835-852.
Kampschreur, M.J., Temmink, H., Kleerebezem, R., Jetten, M.S.M., Van Loosdrecht, M.C.M., 2009. Nitrous oxide emission during wastewater treatment. Water Research 43, 4093-4103.

Lemaire, R., Chauzy, J., Veuillet, F., DiMassimo, R., Sorensen, K., Deleris, S., 2011. Advanced control system to treat ammonia-rich effluent and reduce emission by using an SBR operating via nitrite pathway. In: Proceedings of the 84th Annual Water Environment Federation Technical Exposition and Conference [CD-ROM] Los Angeles, California, Oct 15-19; Water Environment Federation: Alexandria, Virginia.

Pijuan, M., Torà, J., Rodriguez-Caballero, A., Cesar, E., Carrera, J., Perez, J., 2014. Effect of process parameters and operational mode on nitrous oxide emissions from a nitritation reactor treating reject wastewater. Water Research 49, 23-33.

Pocquet, M., Queinnec, I., Spéerandio, M., 2013. Adaptation and identification of models for nitrous oxide (N2O) production by autotrophic nitrite reduction. In: Proceedings 11th IWA Conference on Instrumentation, Control and Automation (ICA2013). Narbonne, France, September 18-20.

Rodriguez-Caballero, A., Pijuan, M., 2013. and NO emissions from a partial nitrification sequencing batch reactor: exploring dynamics, sources and minimization mechanisms. Water Res. 47, 3131-3140.

Rodriguez-Caballero, A., Ribera, A., Balcazar, J.L., Pijuan, M., 2013. Nitritation versus full nitrification of ammonium-rich wastewater: comparison in terms of nitrous and nitric oxides emissions. Bioresour. Technol. 139, 195-202.

**Claims**

1. A method of treating in a reactor an effluent comprising ammonium ions, said method comprising:

   - at least one cycle comprising the following steps:

     (a) a step, hereinafter called "supplying step", of supplying said reactor with said effluent,
     (b) a step, hereinafter called "aeration step", to cause aerobic nitrification of ammonium ions wherein the reactor is aerated, and
     (c) a step, hereinafter called "non aeration step", to cause anoxic denitrification wherein aeration is stopped,

   whereby a treated effluent is obtained
   and
   - (d) a step, hereinafter called "withdrawal step", of recovering the treated effluent from said reactor,

   wherein:

   - aeration step (b) comprises the steps of:
   - measuring, in said reactor, the concentration of dissolved oxygen (DO) in said effluent,
   - continuously calculating the value of the first derivative of the DO with respect to time (dDO/dt)
   - noting dDO/dt and
   - when dDO/dt reaches a first threshold value:

     - waiting for a predetermined time ($T_{inter}$) and
     - stopping the aeration at the end of said $T_{inter}$,
     - whereby the aeration step is terminated,

   and
   - non-aeration step (c) comprises steps of:

     - measuring, in said reactor, a redox potential (ORP) of said effluent,
     - continuously calculating the value of the second derivative of the redox potential with respect to time ($d^2ORP/dt^2$)
     - noting $d^2ORP/dt^2$ and
     - when $d^2ORP/dt^2$ reaches a second threshold value, terminating the non-aeration step (c).

2. The method according to claim 1 wherein the at least one cycle further comprises, before the step of supplying reactor with effluent, a step (o), hereinafter called "pre-aeration step" wherein the reactor is aerated.

3. The method according to claim 1 or 2 wherein $T_{inter}$ is not null.

4. The method according to any of claims 1 to 3 wherein:

- the ammonium ions content of the effluent to be treated is determined and
- the supply of effluent to the reactor is stopped when said ammonium ions content is greater than a threshold value.

**5.** The method according to any of claims 1 to 4 wherein the method comprises n cycles, wherein n is integer from 2 to 10.

**6.** The method according to any of claims 1 to 5 wherein aeration step (b) is terminated when the time of aeration is greater than a maximum aeration time ($T_{aeration\ max}$).

**7.** The method according to any of claims 1 to 6 wherein non-aeration step (c) is stopped when the time of non-aeration is superior to a maximum non-aeration time ($T_{non-aeration\ max}$).

**8.** A device for carrying out the method according to any of claims 1 to 7 comprising:

    - a reactor
    - means for supplying the reactor with effluent,
    - aeration means,
    - treated effluent extraction means,
    - a DO sensor for measuring the DO within said reactor,
    - a processor adapted to:

        - record the measurements of the DO sensor,
        - calculate continuously dDO/dt and
        - stop the aeration means, when the dDO/dt reaches a first threshold value and after a predetermined time ($T_{inter}$),

    - a redox sensor for measuring the redox potential within said reactor, and
    - a processor adapted to:

        - record the measurements of redox sensor,
        - calculate continuously $d^2ORP/dt^2$ and
        - to actuate the aeration means or the treated effluent extraction means, when $d^2ORP/dt^2$ reaches a second threshold value to terminate the non-aeration step (c).

**9.** The device according to claim 8 comprising:

    - a processor adapted to calculate the time of supply of effluent as a function of the ammonium ions content of the effluent to be treated.

**Patentansprüche**

**1.** Verfahren zur Behandlung von Ammonium-Ionen aufweisendem Abwasser in einem Reaktor, wobei das Verfahren aufweist:

    - mindestens einen Zyklus, welcher die folgenden Schritte aufweist:

        (a) einen Schritt, nachfolgend als "Versorgungsschritt" bezeichnet, des Versorgens des Reaktors mit Abwasser,
        (b) einen Schritt, nachfolgend als "Belüftungsschritt" bezeichnet, um aerobe Nitrifikation von Ammonium-Ionen herbeizuführen, in dem der Reaktor belüftet wird, und
        (c) einen Schritt, nachfolgend als "Nichtbelüftungsschritt" bezeichnet, um anoxische Denitrifikation herbeizuführen, in dem die Belüftung eingestellt ist,

    wobei behandeltes Abwasser gewonnen wird
    und

        - (d) einen Schritt, nachfolgend als "Entnahmeschritt" bezeichnet, des Zurückerhaltens des behandelten Abwassers aus dem Reaktor,

wobei:

- der Belüftungsschritt (b) die Schritte aufweist:
- Messen, in dem Reaktor, der Konzentration von ausgestoßenem Sauerstoff (DO) im Abwasser,
- fortlaufendes Berechnen des Werts der ersten Ableitung von DO nach der Zeit (dDO/dt)
- Notieren von dDO/dt und
- wenn dDO/dt einen ersten Grenzwert erreicht:

- Abwarten einer vordefinierten Zeit ($T_{inter}$) und
- Einstellen der Belüftung nach Ablauf der $T_{inter}$,
- wobei der Belüftungsschritt beendet ist,

und
- der Nichtbelüftungsschritt (c) die Schritte aufweist:
- Messen, in dem Reaktor, ein Redoxpotential (ORP) des Abwassers,
- fortlaufendes Berechnen des Werts der zweiten Ableitung des Redoxpotentials nach der Zeit ($d^2DO/dt^2$)
- Notieren von $d^2DO/dt^2$ und
- wenn $d^2DO/dt^2$ einen zweiten Grenzwert erreicht, Beenden des Nichtbelüftungsschritts (c).

**2.** Verfahren nach Anspruch 1, wobei der mindestens eine Zyklus vor dem Schritt des Versorgens des Reaktors mit Abwasser außerdem einen Schritt (o) aufweist, nachfolgend "Vorbelüftungsschritt" genannt, in dem der Reaktor belüftet wird.

**3.** Verfahren nach Anspruch 1 oder 2, wobei $T_{inter}$ nicht gleich null ist.

**4.** Verfahren nach einem der Ansprüche 1 bis 3, wobei:

- ein Gehalt von Ammonium-Ionen des zu behandelnden Abwassers bestimmt wird und
- die Versorgung des Reaktors mit Abwasser eingestellt wird, wenn der Gehalt der Ammonium-Ionen einen Grenzwert übersteigt.

**5.** Verfahren nach einem der Ansprüche 1 bis 4, wobei das Verfahren n Zyklen aufweist, wobei n eine ganze Zahl von 2 bis 10 ist.

**6.** Verfahren nach einem der Ansprüche 1 bis 5, wobei der Belüftungsschritt (b) beendet wird, wenn die Belüftungszeit eine maximale Belüftungszeit ($T_{aeration\ max}$) übersteigt.

**7.** Verfahren nach einem der Ansprüche 1 bis 6, wobei der Nichtbelüftungsschritt (c) beendet wird, sobald die Zeit der Nichtbelüftung eine maximale Nichtbelüftungszeit ($T_{non-aeration\ max}$) übersteigt.

**8.** Vorrichtung zum Ausführen des Verfahrens nach einem der Ansprüche 1 bis 7, aufweisend:

- einen Reaktor
- Mittel zum Versorgen des Reaktors mit Abwasser,
- Belüftungsmittel
- Entnahmemittel für behandeltes Abwasser
- einen DO-Sensor zum Messen des DO innerhalb des Reaktors,
- einen Prozessor, angepasst, um

- die Messungen des DO-Sensors aufzuzeichnen,
- dDO/dt fortlaufend zu berechnen und
- die Belüftungsmittel zu stoppen, wenn der dDO/dt einen ersten Grenzwert erreicht und nach einer bestimmten Zeit ($T_{inter}$),

- einen Redox-Sensor zum Messen des Redox-Potentials innerhalb des Reaktors, und
- einen Prozessor, angepasst, um:

- die Messungen des Redox-Sensors aufzuzeichnen,
- d$^2$DO/dt$^2$ fortlaufend zu berechnen und
- sobald d$^2$DO/dt$^2$ einen zweiten Grenzwert erreicht, die Belüftungsmittel oder die Entnahmemittel für behandeltes Abwasser zu veranlassen, den Nichtbelüftungsschritt (c) zu beenden.

**9.** Vorrichtung nach Anspruch 8, aufweisend:

- einen Prozessor, welcher angepasst ist, die Versorgungszeit des Abwassers als Funktion des Ammonium-Ionen-Gehalts des zu behandelnden Abwassers zu berechnen.

**Revendications**

**1.** Procédé de traitement dans un réacteur d'un effluent comprenant des ions ammonium, ledit procédé comprenant :

- au moins un cycle comprenant les étapes suivantes :

(a) une étape, ci-après dénommée « étape d'alimentation » consistant à alimenter ledit réacteur avec ledit effluent,
(b) une étape, ci-après dénommée « étape d'aération », pour provoquer une nitrification aérobie d'ions ammonium lorsque le réacteur est aéré, et
(c) une étape, ci-après dénommée « étape de non-aération », pour provoquer une dénitrification anoxique lorsque l'aération est arrêtée,
moyennant quoi un effluent traité est obtenu
et
(d) une étape, ci-après dénommée « étape de retrait », consistant à récupérer l'effluent traité à partir dudit réacteur,

**caractérisé en ce que** :

- l'étape d'aération (b) comprend les étapes de :
- mesure, dans ledit réacteur, de la concentration d'oxygène dissous (DO) dans ledit effluent,
- calcul continu de la valeur de la dérivée première du DO par rapport au temps (dDO/dt)
- constatation de dDO/dt et
- lorsque dDO/dt atteint une première valeur seuil :

- attente pendant un temps prédéterminé ($T_{inter}$) et
- arrêt de l'aération à la fin dudit $T_{inter}$,
- moyennant quoi l'étape d'aération est finie,
et
- l'étape de non-aération (c) comprend les étapes de :
- mesure, dans ledit réacteur, d'un potentiel d'oxydoréduction (ORP) dudit effluent,
- calcul continu de la valeur de la dérivée seconde du potentiel d'oxydoréduction par rapport au temps (d$^2$ORP/dt$^2$)
- constatation de d$^2$ORP/dt$^2$ et
- lorsque d$^2$ORP/dt$^2$ atteint une seconde valeur seuil, finir l'étape de non-aération (c).

**2.** Procédé selon la revendication 1, **caractérisé en ce que** l'au moins un cycle comprend en outre, avant l'étape d'alimentation du réacteur en effluent, une étape (o), ci-après dénommée « étape de pré-aération » dans laquelle le réacteur est aéré.

**3.** Procédé selon la revendication 1 ou 2, **caractérisé en ce que** $T_{inter}$ n'est pas nul.

**4.** Procédé selon l'une quelconque des revendications 1 à 3, **caractérisé en ce que** :

- la teneur en ions ammonium de l'effluent à traiter est déterminée et
- l'alimentation du réacteur en effluent est arrêtée lorsque ladite teneur en ions ammonium est supérieure à une valeur seuil.

5. Procédé selon l'une quelconque des revendications 1 à 4, **caractérisé en ce que** le procédé comprend n cycles, dans lequel n est un nombre entier de 2 à 10.

6. Procédé selon l'une quelconque des revendications 1 à 5, **caractérisé en ce que** l'étape d'aération (b) est finie lorsque le temps d'aération est supérieur à un temps d'aération maximal ($T_{\text{aeration max}}$).

7. Procédé selon l'une quelconque des revendications 1 à 6, **caractérisé en ce que** l'étape de non-aération (c) est arrêtée lorsque le temps de non-aération est supérieur à un temps de non-aération maximal ($T_{\text{non-aeration max}}$).

8. Dispositif pour la réalisation du procédé selon l'une quelconque des revendications 1 à 7, comprenant :

    - un réacteur
    - des moyens d'alimentation du réacteur en effluent,
    - des moyens d'aération,
    - des moyens d'extraction d'effluents traités,
    - un capteur de DO pour mesurer le DO au sein dudit réacteur,
    - un processeur adapté pour :
    - enregistrer les mesures du capteur de DO,
    - calculer en continu dDO/dt et
    - arrêter les moyens d'aération, lorsque le dDO/dt atteint une première valeur seuil et après un temps prédé-terminé ($T_{\text{inter}}$),
    - un capteur d'oxydoréduction pour mesurer le potentiel d'oxydoréduction au sein dudit réacteur, et
    - un processeur adapté pour :
    - enregistrer les mesures du capteur d'oxydoréduction,
    - calculer en continu $d^2ORP/dt^2$ et
    - actionner les moyens d'aération ou les moyens d'extraction d'effluents traités, lorsque $d^2ORP/dt^2$ atteint une seconde valeur seuil pour finir l'étape (c) de non-aération.

9. Dispositif selon la revendication 8, comprenant :

    - un processeur adapté pour calculer le temps d'alimentation en effluent en fonction de la teneur en ions ammonium de l'effluent à traiter.

(a)

(b)

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2966146

**Non-patent literature cited in the description**

- **ANTHONISEN, A.C. ; LOEHR, R.C. ; PRAKASAM, T.B.S. ; SRINATH, E.G.** Inhibition of Nitrification by Ammonia and Nitrous Acid. *Journal (Water Pollution Control Federation),* 1976, vol. 48, 835-852
- **KAMPSCHREUR, M.J. ; TEMMINK, H. ; KLEERE-BEZEM, R. ; JETTEN, M.S.M. ; VAN LOOS-DRECHT, M.C.M.** Nitrous oxide emission during wastewater treatment. *Water Research,* 2009, vol. 43, 4093-4103
- Advanced control system to treat ammonia-rich effluent and reduce emission by using an SBR operating via nitrite pathway. **LEMAIRE, R. ; CHAUZY, J. ; VEUILLET, F. ; DIMASSIMO, R. ; SORENSEN, K. ; DELERIS, S.** Proceedings of the 84th Annual Water Environment Federation Technical Exposition and Conference [CD-ROM. Water Environment Federation, 2011
- **PIJUAN, M. ; TORÀ, J. ; RODRIGUEZ-CABALLE-RO, A. ; CESAR, E. ; CARRERA, J. ; PEREZ, J.** Effect of process parameters and operational mode on nitrous oxide emissions from a nitritation reactor treating reject wastewater. *Water Research,* 2014, vol. 49, 23-33
- **POCQUET, M. ; QUEINNEC, I. ; SPÉERANDIO, M.** Adaptation and identification of models for nitrous oxide (N2O) production by autotrophic nitrite reduction. *Proceedings 11th IWA Conference on Instrumentation, Control and Automation (ICA2013),* 18 September 2013
- **RODRIGUEZ-CABALLERO, A. ; PIJUAN, M.** NO emissions from a partial nitrification sequencing batch reactor: exploring dynamics, sources and minimization mechanisms. *Water Res,* 2013, vol. 47, 3131-3140
- **RODRIGUEZ-CABALLERO, A. ; RIBERA, A. ; BALCAZAR, J.L. ; PIJUAN, M.** Nitritation versus full nitrification of ammonium-rich wastewater: comparison in terms of nitrous and nitric oxides emissions. *Bioresour. Technol.,* 2013, vol. 139, 195-202